# EUROPEAN PATENT APPLICATION

(11) **EP 1 972 946 A1**
(43) Date of publication of application: **24.09.2008**
(21) Application number: 08005183.2
(22) Date of filing: 19.03.2008
(51) Int. Cl.: G01N 35/10, B01L 3/00

(54) **Liquid tank and liquid circulation apparatus**

(30) Priority: 23.03.2007 JP 2007076854
(71) Applicant: Fujifilm Corporation, Tokyo 106-0031 (JP)
(72) Inventor: Nogawa, Minako, Ashigarakami-gun Kanagawa (JP)
(74) Representative: Klunker, Hans-Friedrich

(57) **Abstract**

In a liquid tank, a sectional area of a liquid flow path when viewed in a liquid circulation direction is set large when a contact angle between a liquid and a tank body is large, and the liquid in circulation is not in contact with the upper lid member.

## Description

### BACKGROUND OF THE INVENTION

### Field of the Invention

The present invention relates to a liquid tank in which a liquid may be reserved and a liquid circulation apparatus including a liquid tank.

### Description of the Related Art

A measurement apparatus which exposes a fixed reagent in a flow path and supplies an analyte to the flow path to measure an interaction between the reagent and the analyte (see Japanese Patent No. 3294605) is known. When measurement is performed by the measurement apparatus, a large amount of buffer liquid controlled to have a predetermined concentration is necessary.

When a buffer liquid is automatically supplied by using an access member such as a pipet, the buffer liquid must be reserved in a liquid tank which may be accessed by the pipet or the like. A concentration of the buffer liquid in the liquid tank must be kept constant.

An access port may be formed on the liquid tank and the buffer liquid may be circulated to keep the definite concentration of it. However, since the access port is formed on the liquid tank, the liquid may overflow from the access port when the buffer liquid is flowed in the liquid tank.

The present invention has been made in view of the above circumstances and has its object to provide a liquid tank which may suppress a circulated liquid from overflowing from the access port and a liquid circulation apparatus including the liquid tank.

### SUMMARY OF THE INVENTION

In order to solve the above object, a liquid tank of a first aspect of the invention includes: a tank body in which a liquid flow path for circulating a liquid therein is constructed; an upper lid member which constitutes an upper surface wall of the liquid flow path and on which an access port which communicates with an upper portion of the liquid flow path and into which an access instrument accessing to the liquid flow path can be inserted; a supply port which communicates with one end of the liquid flow path and supplies the liquid to the liquid flow path; and a discharge port which communicates with the other end of the liquid flow path and discharges the liquid from the liquid flow path, wherein a sectional area of the liquid flow path viewed in a liquid circulation direction is set to be large as a contact angle between the liquid and the tank body is large, and the liquid in circulation is not in contact with the upper lid member.

In the liquid tank of the above configuration, a liquid is supplied from the supply port to the liquid flow path. The supplied liquid is circulated in the liquid flow path and discharged from the discharge port. In this manner, the liquid is circulated without being retained in the liquid tank, whereby it is possible to suppress evaporation of the liquid or a change in concentration.

An amount of consumption of the liquid supplied to the liquid tank can be reduced by circulating the liquid.

A sectional area of the liquid flow path in which the liquid is circulated is set to be large as a contact angle between the liquid and the tank body is large, and the liquid in circulation is not in contact with the upper lid member. In this manner, the sectional area of the liquid flow path is set to make it possible to suppress the circulated liquid from overflowing from the access port.

In a liquid tank of a second aspect of the invention, a distance between the upper lid member and a liquid level of the liquid is 1 mm or more.

In order to prevent the liquid from overflowing from the liquid flow path, the upper lid member is not in contact with the liquid level such that the distance between the upper lid member and the liquid level is 1 mm or more.

In a liquid tank of a third aspect of the invention, the tank body comprises polypropylene or stainless steel.

When the liquid tank comprises polypropylene, the liquid tank has good chemical resistance, and a substance constituting the tank body can be prevented from being eluted in a buffer liquid. When the liquid tank comprises stainless steel, a contact angle between the liquid tank and the liquid can be reduced, and a sectional area of the liquid tank may be reduced.

A liquid circulation apparatus of a fourth aspect of the invention includes: a liquid bottle in which a liquid is reserved; a liquid tank of any one of the first to third aspects; a circulation path which is connected to the liquid bottle and the liquid tank and circulates the liquid between the liquid bottle and the liquid tank; and a feed pump which is connected to the circulation path and feeds the liquid.

According to the liquid circulation apparatus having the above configuration, since the liquid tank which suppresses the circulated liquid from overflowing from the access port is used, the liquid may be stably circulated in the liquid circulation path.

### BRIEF DESCRIPTION OF THE DRAWINGS

Embodiments of the present invention will be described in detail based on the following figures, wherein:
FIG. 1 is a perspective view of an interior of a biosensor according to the embodiment of the present invention;
FIG. 2 is an upper view of an interior of the biosensor according to the embodiment of the present invention;
FIG 3 is a perspective view of a measurement stick according to the embodiment of the present invention;
FIG 4 is an exploded perspective view of the measurement stick according to the embodiment of the present invention;

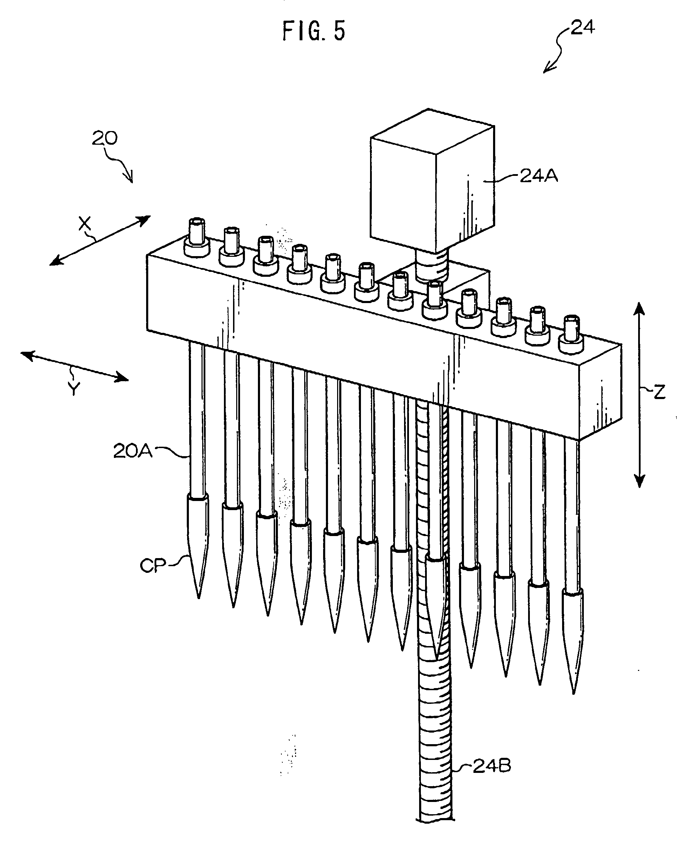

FIG. 5 is a perspective view showing a vertical drive mechanism of a dispensing head of the biosensor according to the embodiment of the present invention;
FIG. 6 is a schematic view of a portion near a measurement portion of the biosensor according to the embodiment of the present invention;
FIG 7 is a view of a schematic configuration of a liquid circulation apparatus according to the embodiment of the present invention;
FIG. 8 is an exploded perspective view of a buffer tank of the biosensor according to the embodiment of the present invention;
FIG. 9A is a side sectional view of the buffer tank of the biosensor according to the embodiment of the present invention along a liquid flow path direction;
FIG. 9B is a side sectional view of the buffer tank of the biosensor according to the embodiment of the present invention along a direction orthogonal to the liquid flow direction;
FIG 10A is a sectional view of a liquid flow path of a buffer tank 1 according to an example;
FIG 10B is a sectional view of a liquid flow path of a buffer tank 2 according to an example; and
FIG. 10C is a sectional view of a liquid flow path of a buffer tank 3 according to an example.

### DETAILED DESCRIPTION OF THE INVENTION

Herebelow, an example of an exemplary embodiment of the present invention will be described in detail with reference to the drawings.

A buffer liquid circulation device 71 according to the present invention is used for a biosensor 10 as a measurement device.

A biosensor 10 is a so-called surface plasmon sensor which measures an interaction between protein Ta serving as a test substance and a sample A by using surface plasmon resonance generated on a surface of a metal film.

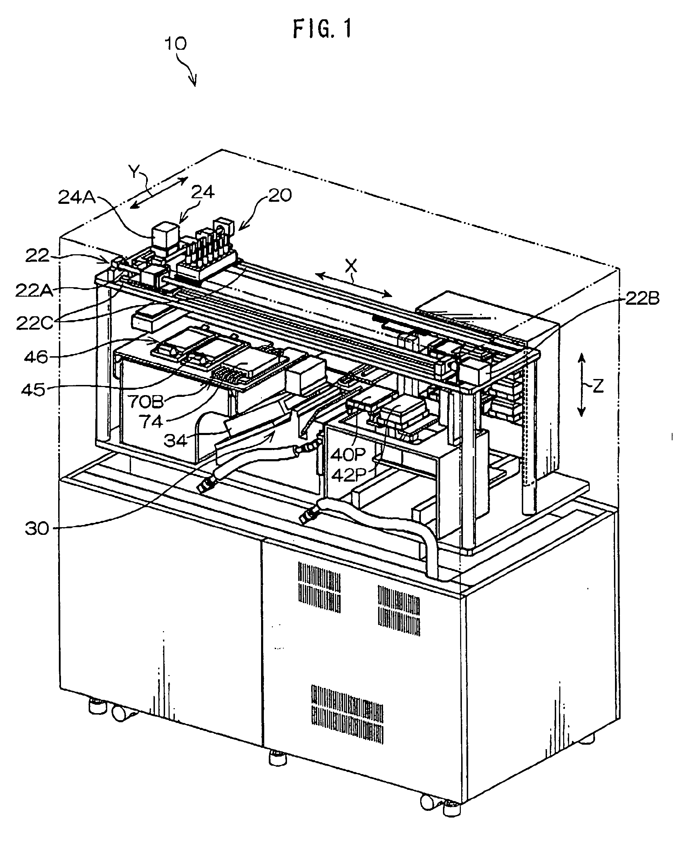

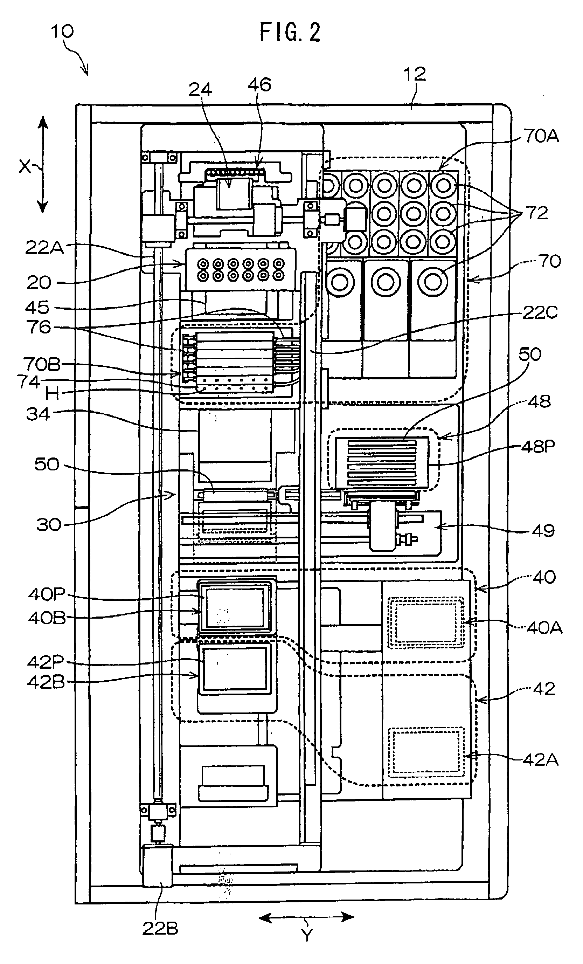

As shown in FIGS. 1 and 2, a biosensor 10 includes a dispensing head 20 serving as an access member, a measurement portion 30, a sample stock portion 40, a pipet chip stock portion 42, a buffer liquid circulation unit 70, a refrigeration portion 46, and a measurement stick stock portion 48.

A measurement stick 50 is set in the measurement portion 30. A sample is supplied to protein Ta fixed on the measurement stick 50 to detect a change in signal, so that measurement is performed by the biosensor 10.

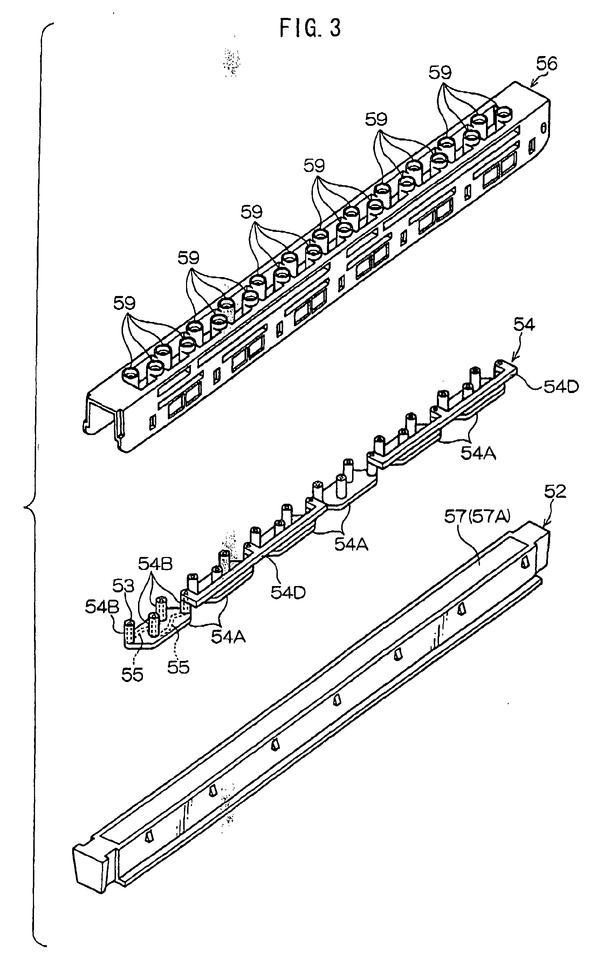

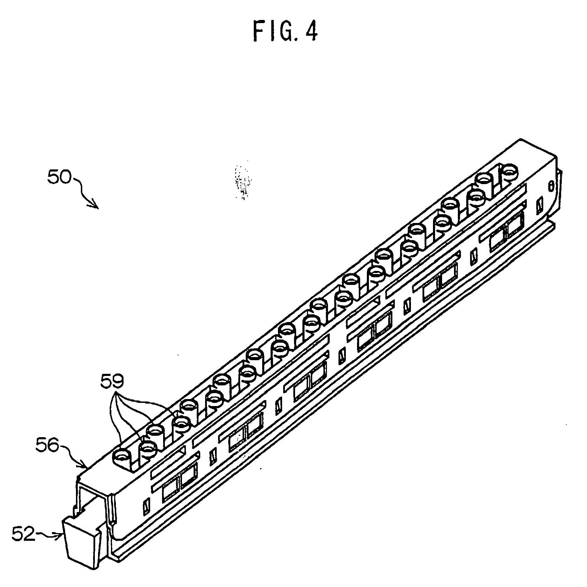

The measurement stick 50, as shown in FIGS. 3 and 4, is constituted by a dielectric block 52, a flow path member 54, and a holding member 56.

The dielectric block 52 is long and has an upper surface on which a flat measurement surface is formed. A metal film 57 is formed on the measurement surface, and a linker layer 57A is formed on the metal film 57. The protein Ta is fixed on the linker layer 57A.

As shown in FIG. 3, the flow path member 54 has six base portions 54A, and four cylindrical members 54B are formed to stand upright on each of the base portions 54A. Respective sets of three base portions 54A are connected by the connecting member 54D at an upper part of one of the upright cylindrical members 54B on each of the three base portions 54A. The flow path member 54 consists of a soft, elastic, and flexible material, for example, amorphous polyolefin elastomer.

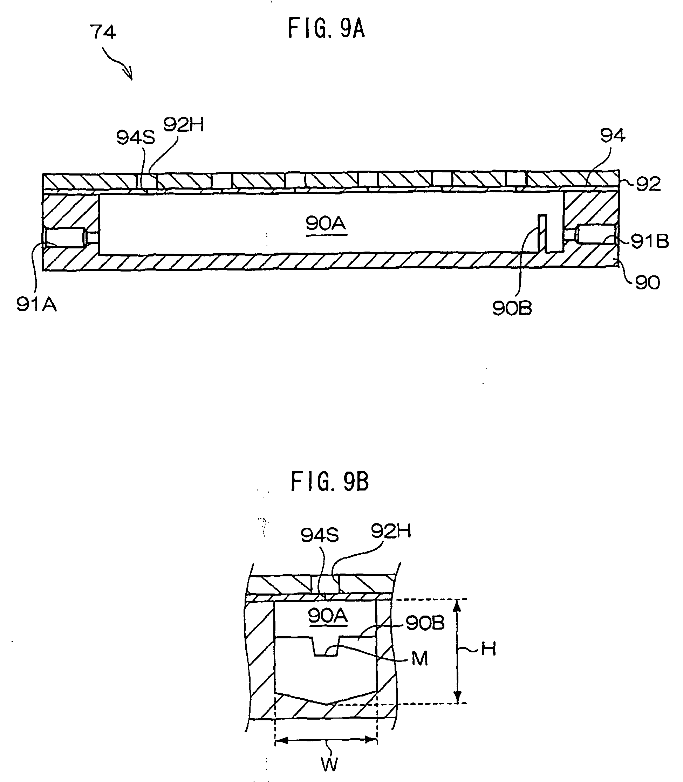

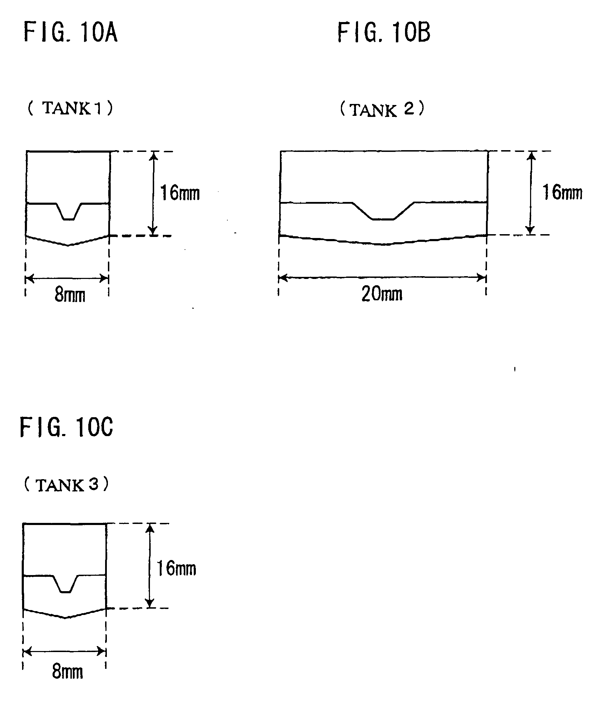

In the base portion 54A, as shown in FIGS. 9 and 10, two approximately S-shaped flow path grooves are formed on the bottom side. The flow path groove has end portions each communicating with a hollow portion of one of the cylindrical members 54B. The base portions 54A has a bottom surface which is brought into tight contact with an upper surface of the dielectric block 52, a space constituted between the flow path groove and the upper surface of the dielectric block 52 and the hollow portion constitute a liquid flow path 55. Two liquid flow paths 55 are formed in one of the base portions 54A. In each of the liquid flow paths 55, an inlet/outlet port 53 of the liquid flow path 55 is formed in an upper end face of the cylindrical members 54B.

A holding member 56 is long U-shape, and is integral molded sandwiching the flow path member 54 between the U-shape. The holding member 56 is formed receiving portion 59 in the position corresponding the cylindrical member 54B of the flow path member 54. Thereby, the flow path member 54 is arranged closely contact with the dielectric block 52.

The dispensing head 20, as shown in FIG..1, can be moved in a direction of an arrow X by a horizontal drive mechanism 22. The horizontal drive mechanism 22 is constituted by a ball screw 22A, a motor 22B, and a guide rail 22C. The ball screw 22A and the guide rail 22C are arranged in the X direction. As the guide rail 22C, two guide rails are parallel arranged. One of the guide rails 22C is arranged below the ball screw 22A with a predetermined interval. The dispensing head 20 is moved in the X direction along the guide rail 22C by rotation of the ball screw 22A.

A vertical drive mechanism 24 which moves the dispensing head 20 in a direction of an arrow Z is arranged for the dispensing head 20. The vertical drive mechanism 24, as shown in FIG. 11, includes a motor 24A and a drive shaft 24B arranged in the Z direction to move the dispensing head 20 in the Z direction.

The dispensing head 20 has 12 dispensing pipes 20A. The dispensing pipes 20A are arranged in a line along a direction of an arrow Y orthogonal to the X direction. The two adjacent dispensing pipes 20A constitute one pair. One of the pair is to supply liquid, and the other is to discharge liquid. A pipet chip CP is attached to the distal end of the dispensing pipe 20A.

The pipet chips CP are stoked in the pipet chip stocker 42P and can be exchanged as needed.

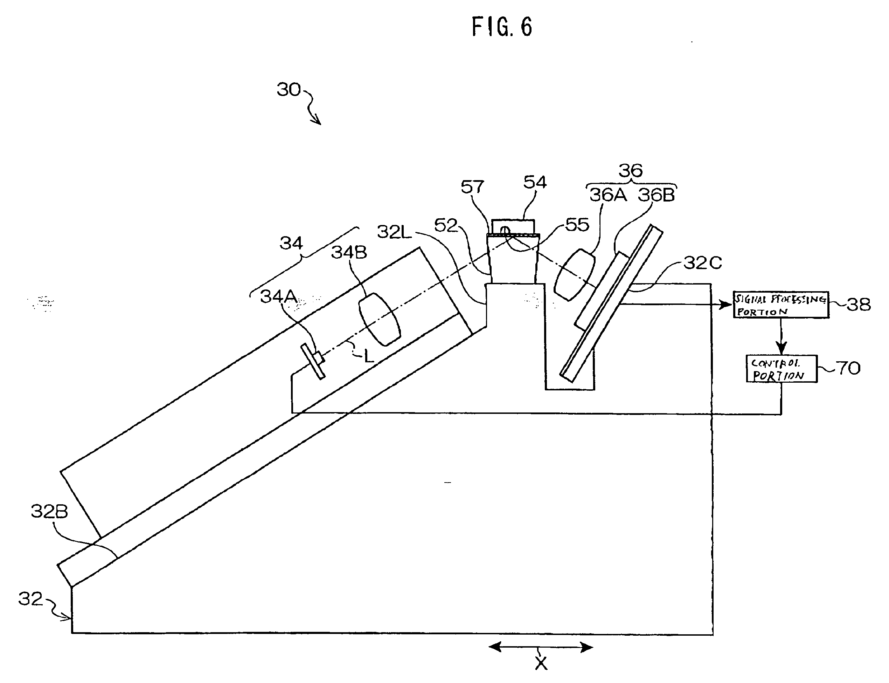

As shown in FIG. 6, the measurement portion 30 includes an optical machine platen 32, a light-emitting portion 34, and a light-receiving portion 36. In FIG. 6, members other than the dielectric block 52 and the flow path member 54 of the measurement stick 50 are omitted. On the optical machine platen 32, when viewed from a side direction, a machine platen rail portion 32L constituted by a horizontal plane at the upper center of the optical machine platen 32, an emission inclined portion 32B which is gradually lowered in a direction away from the machine platen rail portion 32L, and a light-receiving inclined portion 32C arranged on a side opposing the emission inclined portion 32B with the machine platen rail portion 32L therebetween are formed. In the machine platen rail portion 32L, the measurement stick 50 is set along a Y direction. In the emission inclined portion 32B of the optical machine platen 32, the light-emitting portion 34 which emits a light beam to the measurement stick 50 is set. The light-receiving portion 36 is arranged on the light-receiving inclined portion 32C.

The light-emitting portion 34 includes a light source 34A and a lens unit 34B. The light-receiving portion 36 includes a lens unit 36A and a CCD 36B. The light source 34A is connected to a control portion 60, and the CCD 36B is connected to a signal processing portion 38 and the control portion 60.

A light beam is emitted from the light source 34A to the measurement stick 50, and a reflected beam reflected by an interface between the metal film 57 and the dielectric block 52 is received by the CCD 36B. A light detection signal photoelectrically converted is output to a signal processing unit 38. In the signal processing unit 38, predetermined processing is performed on the basis of the input light detection signal to obtain measurement data.

As shown in FIG. 2, the sample stock portion 40 is constituted by a sample stacking portion 40A and a sample setting portion 40B. On the sample stacking portion 40A, a sample plate 40P in which different analyte solutions are stocked in cells, respectively, is stacked in a Z direction and accommodated. In the sample setting portion 40B, one sample plate 40P is carried from the sample stacking portion 40A by a carrying mechanism (not shown) and set.

The pipet chip stock portion 42 is constituted by a pipet chip stacking portion 42A and a pipet chip setting portion 42B. In the pipet chip stacking portion 42A, pipet chip stockers 42P which hold a plurality of pipet chips are stacked in the Z direction (vertical direction) and accommodated. In the pipet chip setting portion 42B, one pipet chip stocker 42P is conveyed by a conveying mechanism (not shown) from the pipet chip stacking portion 42A and set.

The buffer liquid circulation unit 70 is constituted by a bottle accommodation unit 70A and a buffer supply portion 70B. In the bottle accommodation unit 70A, a plurality of bottles 72 in which buffer liquid is reserved are accommodated. In the buffer supply portion 70B, a buffer tank 74 is set. In the buffer liquid circulation unit 70, a buffer liquid circulation device 71 which circulates reserved the buffer liquid between the bottles 72 and the buffer tank 74 is constituted. The details of the buffer liquid circulation device 71 will described later.

A correction plate 45 is arranged adjacent to the buffer supply portion 70B, and a refrigeration portion 46 is arranged adjacent to the correction plate 45. The correction plate 45 is to adjust the concentration of the buffer liquid and has a plurality of cells arranged in the form of a matrix. In the refrigeration portion 46, a sample required to be refrigerated is arranged. The refrigeration portion is set at a low temperature. The sample is kept in a low temperature state on the refrigeration portion.

In the measurement stick stock portion 48, a measurement stick accommodation plate 48P is set. In the measurement stick accommodation plate 48P, the plurality of measurement sticks 50 serving as measurement chips are accommodated. The measurement stick 50 is carried to and set in the measurement portion 30 by a measurement stick carrying mechanism 49.

Details of the buffer liquid circulation device 71 will be described below.

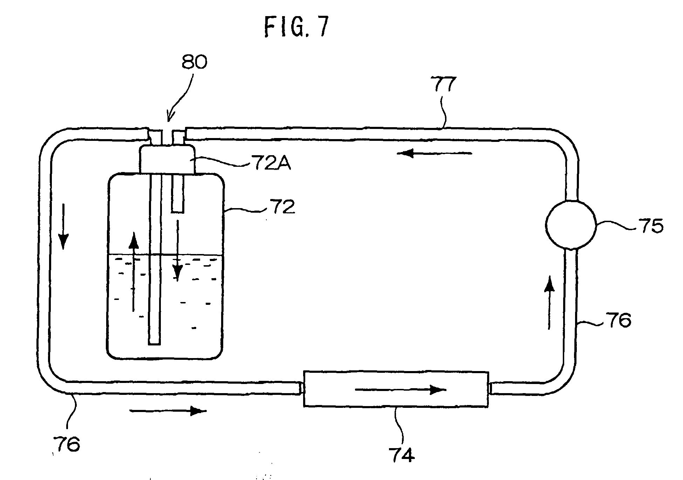

As shown in FIG. 7, the buffer liquid circulation device 71 includes the bottle 72, the buffer tank 74, a pump 75, and a circulation path 76. The bottle 72 and the buffer tank 74 communicate with the circulation path 76, and the pump 75 is connected to the circulation path 76. The circulation path 76 is constituted by a tube serving as a flow path for the buffer liquid.

To a bottle opening 72A of the bottles 72, a bottle cap 80 is fixed. The inside of the bottles 72 is airtightly sealed by the bottle cap 80.

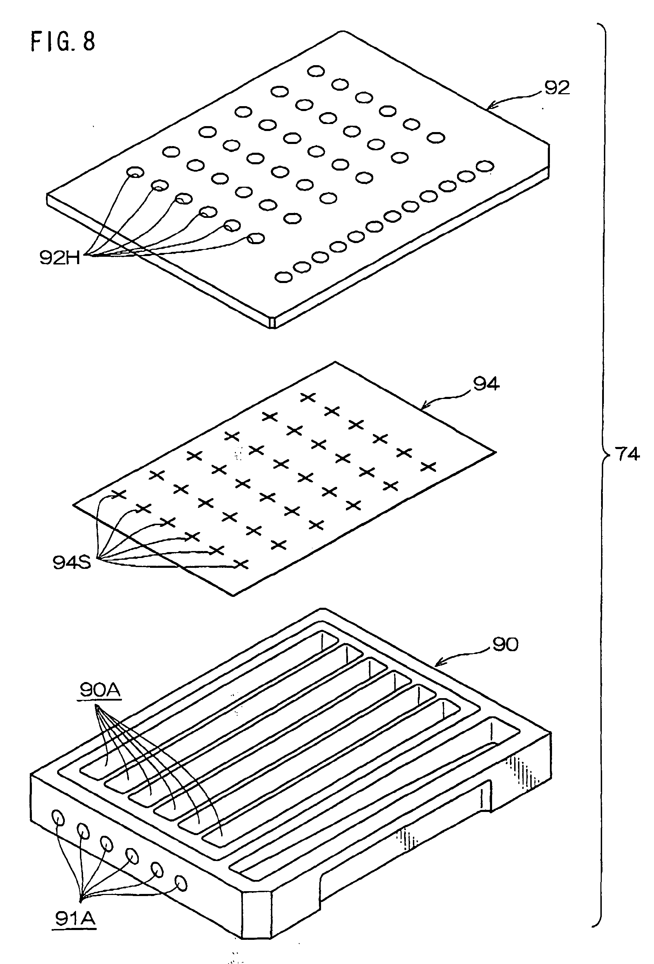

A buffer tank 74, as shown in FIG. 8 and FIG. 9A, is constructed such that a tank body 90, a closing sheet 94, and a lid plate 92 are stacked from the lower side in the order named. The tank body 90 is divided into a plurality of partitions to constitute a liquid flow path 90A in which the buffer liquid is retained in the respective partitions. As the buffer liquid, buffer liquid having a PH buffer capability such as phosphate buffered saline (PBS) is arbitrarily selected depending on the analyzed molecules and used.

The bottom of the liquid flow path 90A, as shown in FIG 9B, has an inclination such that a center portion in the direction of a flow path width W is lower than an end portion. Buffer liquids from the different bottles 72 are supplied to the liquid flow paths 90A, respectively. In the tank body 90, a supply port 91A communicating with one end of the liquid flow path 90A and a discharge port 91B communicating with the other end of the liquid flow path 90A are constructed for each of the liquid flow paths 90A. On the discharge port 91B side of the tank body 90, a weir 90B is arranged. A notch M is formed in a center portion of the weir 90B as shown in FIG. 9B. The buffer liquid can be retained up to the level of the weir 90B in the liquid flow path 90A.

The tank body 90 and the lid plate 92 may comprise of stainless steel (SUS) or polypropylene (PP). In particular, since the polypropylene (PP) has good chemical resistance, a material constituting the tank body 90 may be prevented from being eluted in the buffer liquid.

The lid plate 92 is a plate shape which covers the upper surface of the tank body 90. On the lid plate 92, access ports 92H are formed into which pipet chips CP are inserted. Six access ports 92H are aligned and formed along each of the liquid flow paths 90A.

The closing sheet 94 is sandwiched between the tank body 90 and the lid plate 92. A slit 94S cut in the shape of a cruciform in which the pipet chip CP can be inserted is formed. The slit 94S is formed at a position corresponding to the access port 92H. The closing sheet 94 comprises a resin or the like which can be elastically deformed. The closing sheet 94 is deformed to be bent downward when the pipet chip CP is inserted, and restored to seal the access port 92H after the pipet chip CP is removed.

The pipet chip CP accesses the buffer tank 74 from the upper side, and is inserted into the liquid flow path 90A through the slit 94S and the access port 92H. A predetermined amount of buffer liquid is sucked by the inserted pipet chip CP, and the buffer liquid is supplied to the measurement stick 50 set in the measurement portion 30. When the pipet chip CP is spaced-apart from the buffer tank 74, the slit 94S is restored to close the access port 92H.

Circulation of the buffer liquid between the buffer tank 74 and the bottle 72 is performed by the pump 75. The buffer liquid is flowed from the supply port 91A side to the discharge port 91B side in the liquid flow path 90A. A capacity of the liquid flow path 90A is sufficient with respect to suction by the six pipet chips CP However, when a contact angle between the buffer liquid and the tank body 90 is large, the buffer liquid may overflow from the access port 92H. It becomes apparent by an experiment by the applicant that, when a boundary tension between the tank body 90 and the buffer liquid is large, the contact angle becomes large, whereby a liquid level of the buffer liquid considerably changes depending on materials constituting the tank body 90 or the types or concentrations of the buffer liquid. On the other hand, in order to suppress deterioration of the buffer liquid, an air layer formed on the upper portion of the liquid flow path 90A is preferably made as small as possible.

Therefore, the sectional area of the liquid flow path 90A constructed in the tank body 90 is set depending on a type and a concentration of a buffer liquid to be used and the material of the tank body 90. More specifically, the sectional area is set to be large when the contact angle between the buffer liquid and the tank body 90 is large, and the sectional area is set such that the buffer liquid to be fed is not in contact with the lid plate 92. When the sectional area is set as described above, even though a buffer liquid flows in the liquid flow path 90A, the buffer liquid can be suppressed from overflowing from the access port 92H.

The distance between the upper lid member and the liquid level of the buffer liquid is preferably 1 mm or more in view of suppression of overflowing of the buffer liquid.

In order to reduce the sectional area, the contact angle between the tank body 90 and the buffer liquid is preferably made small. For this reason, a surface (wall surface) of the liquid flow path 90A may be coated with a hydrophilic material, or a hydrophilic agent may be added to the material of the tank body 90 to promote wettability to reduce the contact angle.

In the exemplary embodiment, as the measurement apparatus, a biosensor is explained as one example. However, the liquid circulation apparatus of the invention can also be used in other apparatuses which require liquid circulation.

### [Examples]

As the buffer tank 74 described above, buffer tanks consisting of polypropylene (PP) and stainless steel were prepared. As buffer tanks consisting of polypropylene, as shown in FIG. 10, tanks of two types, i.e., a tank 1 which included a liquid flow path having a section having a width W = 8 mm and a height H = 16 mm, a weir having a height RH = 6 mm, and a sectional area A = 128 mm³ (see FIG. 10A) and a tank 2 which included a liquid flow path having a section having a width W = 20 mm, a height H = 16 mm, a weir having a height RH = 6 mm, and a sectional area A = 320 mm³ (see FIG. 10B) were prepared. The liquid flow paths were formed by performing cutting work to PP. As a material of a stainless-steel tank 3, SUS316 was used. The tank 3 included a liquid flow path having a width W = 8 mm and a height H = 16 mm, a weir having a height RH = 6 mm, and a sectional area A = 128 mm³ (see FIG 10C).

A liquid 1 (ultrapure water), a liquid 2 (ethanol (purity of 99.75)), a liquid 3 (adjuster having a dimethyl sulfoxide (DMSO) concentration of 0.1%) were fed to the tanks 1 to 3, respectively. The liquid 3 was adjusted by 10 × phosphate buffered saline (PBS): 10 ml, DMSO: 0.1 ml, and superpure water: 89.9 ml, and the liquid 4 was adjusted by 10 × phosphate buffered saline (PBS): 10 ml, DMSO: 10 ml, and superpure water: 80 ml. Each of the liquids 1 to 3 was fed at two feed rates of 10.5 ml (feed rate 1) and 31.5 ml (feed rate 2) three times.

Correlations between the liquids 1 to 4, PP, and SUS316 are given by Table 1. Table 1 exhibits that a contact angle is large when a numerical value is large. A liquid level of each fed liquid is as shown in Table 2.

**[Table 1]**

| | PP | SUS316 |
|---|---|---|
| Liquid 1 | 5 | 4 |
| Liquid 2 | 3 | 2 |
| Liquid 3 | 1 | 1 |
| Liquid 4 | 1 | 1 |

**[Table 2]**

| Base material | Tank 1 | | | | | | Tank 2 | | | | | | Tank 3 | | | | | |
|---|---|---|---|---|---|---|---|---|---|---|---|---|---|---|---|---|---|---|
| Feed rate | (1) 10.5 ml/min | | | (2) 31.5 ml/min | | | (1) 10.5 ml/min | | | (2) 31.5 ml/min | | | (1) 10.5 ml/min | | | (2) 31.5 ml/min | | |
| | N= 1 | N= 2 | N= 3 | N= 1 | N= 2 | N= 3 | N= 1 | N= 2 | N= 3 | N= 1 | N= 2 | N= 3 | N= 1 | N= 2 | N= 3 | N= 1 | N= 2 | N= 3 |
| Liquid 1 | × | × | × | × | × | × | Δ | Δ | Δ | Δ | Δ | Δ | Δ | Δ | Δ | Δ | Δ | Δ |
| Liquid 2 | Δ | Δ | Δ | Δ | Δ | Δ | ○ | ○ | ○ | ○ | ○ | ○ | Δ | Δ | Δ | Δ | Δ | Δ |
| Liquid 3 | ⊚ | ⊚ | ⊚ | ⊚ | ⊚ | ⊚ | ⊚ | ⊚ | ⊚ | ⊚ | ⊚ | ⊚ | ○ | ○ | ○ | ○ | ○ | ○ |
| Liquid 4 | ⊚ | ⊚ | ⊚ | ⊚ | ⊚ | ⊚ | ⊚ | ⊚ | ⊚ | ⊚ | ⊚ | ⊚ | ○ | ○ | ○ | ○ | ○ | ○ |

A double circle in Table 2 indicates that the liquid level was low, and a single circle in Table 2 indicates that the liquid level was intermediate. At both the liquid levels, the liquid does not overflow. On the other hand, a triangle indicates that the liquid level is high, and the liquid did not barely overflow because the liquid level is lower than the upper level of the buffer tank 74 by about 1 mm, and a cross indicates that the buffer liquid overflowed from the access port.

According to Table 2, the sectional areas of the liquid flow paths are equal to each other, and only the materials of the liquid flow paths are different. When the tank 1 and the tank 3 were compared with each other, the liquid 1 overflowed from the tank 1 having a numerical value of a contact angle of 5, and overflow did not occur in the tank 3 having a numerical value of a contact angle of 4 although the liquid level was high.

Furthermore, PP was commonly used as the materials of the tank bodies. When the tank 1 and the tank 2 which were different from each other in only sectional area were compared, even though the levels of the weirs were equal to each other, the liquid levels of the liquid 1 and the liquid 2 lowered in the tank 2 having the large sectional area.

As described above, it is apparent that when a contact angle between the liquid and the tank body constituting the liquid flow path is large, the liquid level is high even though the level of the weir does not change. It is understood that when the sectional area is increased, the liquid level may be lowered.

## Claims

1. A liquid tank comprising:
a tank body in which a liquid flow path for circulating a liquid therein is constructed;
an upper lid member which constitutes an upper surface wall of the liquid flow path and on which an access port which communicates with an upper portion of the liquid flow path and into which an access instrument accessing the liquid flow path can be inserted is formed;
a supply port which communicates with one end of the liquid flow path and supplies the liquid to the liquid flow path; and
a discharge port which communicates with the other end of the liquid flow path and discharges the liquid from the liquid flow path,
wherein a sectional area of the liquid flow path viewed in a liquid circulation direction is set to be large as a contact angle between the liquid and the tank body is large, and the liquid in circulation is not in contact with the upper lid member.

2. The liquid tank of claim 1, wherein
a distance between the upper lid member and a liquid level of the liquid is 1 mm or more.

3. The liquid tank of claim 1, wherein the tank body comprises polypropylene or stainless steel.

4. The liquid tank of claim 2, wherein the tank body comprises polypropylene or stainless steel.

5. A liquid circulation apparatus comprising:
a liquid tank including a tank body in which a liquid flow path for circulating a liquid therein is constructed, an upper lid member which constitutes an upper surface wall of the liquid flow path and on which an access port which communicates with an upper portion of the liquid flow path and into which an access instrument accessing the liquid flow path can be inserted is formed, a supply port which communicates with one end of the liquid flow path and supplies the liquid to the liquid flow path, and a discharge port which communicates with the other end of the liquid flow path and discharges the liquid from the liquid flow path, wherein a sectional area of the liquid flow path viewed in a liquid circulation direction is set to be large as a contact angle between the liquid and the tank body is large, and the liquid in circulation is not in contact with the upper lid member;
a liquid bottle in which a liquid is retained;
a circulation path which is connected to the liquid bottle and the liquid tank and circulates the liquid between the liquid bottle and the liquid tank; and
a feed pump which is connected to the circulation path and feeds the liquid.

6. The liquid circulation apparatus of claim 5, wherein a distance between the upper lid member and a liquid level of the liquid is 1 mm or more.
